# EUROPÄISCHE PATENTANMELDUNG

(11) **EP 0 770 418 A1**
(43) Veröffentlichungstag der Anmeldung: **02.05.1997**
(21) Anmeldenummer: 96116415.9
(22) Anmeldetag: 14.10.1996
(51) Int. Cl.: B01D 46/22, B05B 15/12

(54) **Verfahren zum Reinigen einer vliesartigen Filtermatte**

(30) Priorität: 24.10.1995 AT 1755/95
(71) Anmelder: Berkmann Anlagenbau Gesellschaft m.b.H., 6912 Hörbranz (AT)
(72) Erfinder: Berkmann Rainer, 6850 Dornbirn (AT); Duelli, Heinz, Dipl.-Ing. Dr., 6833 Klaus (AT)
(74) Vertreter: Hefel, Herbert, Dipl.-Ing.

(57) **Zusammenfassung**

Das Verfahren dient zur Reinigung einer vliesartigen Filtermatte (4) einer Filtereinrichtung zur Filterung eines Partikel, insbesondere Lack- und/oder Lösungsmittel enthaltenden Luftstromes. Dabei wird die Filtermatte (4) bereichsweise in ihrer Stärke verjüngt und anschließend wieder auf ihre Stärke (s) expandieren gelassen. Der Bereich, in dem die Filtermatte (4) verjüngt wird, sukzessive über im wesentlichen die gesamte Ausdehnung der Filtermatte (4) verändert. Dazu weist die Filtereinrichtung eine Walze (16) auf, deren Durchmesser (d) im Bereich der Stärke (s) der Filtermatte (4) liegt oder kleiner als dieser ist. Um diese Walze (16) ist die Filtermatte (4) geführt.

## Beschreibung

Die Erfindung bezieht sich auf ein Verfahren zum Reinigen einer vliesartigen Filtermatte einer Filtereinrichtung gemäß dem Oberbegriff des Patentanspruches 1 sowie auf eine Einrichtung zur Durchführung des Verfahrens.

Beispielsweise in Lackieranlagen, in denen Lack mittels Druckluft auf das zu lackierende Werkstück aufgespritzt wird, geht ein erheblicher Teil des Lacks, der am zu lackierenden Werkstück vorbeigeblasen wird (man spricht vom "Overspray", der bis zu 50 % der gesamten Lackmenge betragen kann), in die Luft über und bildet mit dieser ein Aerosol. Zur Ausfilterung dieser Lackpartikel und/oder Lösungsmittelpartikel aus der Luft sind zwei Verfahren bekannt:

Bei der Naßabscheidung wird die die Lackpartikel enthaltende Luft durch einen Wassersprühvorhang durchgeleitet. Die vom Wasser ausgewaschenen Lackpartikel müssen in der Folge mit chemischen Mitteln wieder vom Wasser getrennt werden und der dabei anfallende Abfall muß als Sondermüll entsorgt werden.

Bei der Trockenabscheidung wird das aus dem Lackierraum abgesaugte Aerosol durch eine Filtermatte geleitet, in der sich die ausgefilterten Lackpartikel anlagern. Im Aerosol liegen die Lackpartikel normalerweise bereits in fester Form vor, aber selbst wenn die Filtermatte im Bereich unmittelbar hinter dem zu lackierenden Werkstück angeordnet ist und die Lackpartikel noch in flüssiger Form auf die Filtermatte auftreffen, gehen die Lackpartikel keine festere Bindung mit der Filtermatte ein und trocknen sofort aus. Zur Regeneration der Filtermatte, welche notwendig wird, wenn die Speicherkapazität der Filtermatte zu einem guten Teil ausgeschöpft ist, werden die Farbpartikel mittels eines Staubsaugers abgesaugt. Dieser abgesaugte Farbstaub ist ausgetrocknet, nicht mehr chemisch reaktionsfähig und muß somit nicht als Sondermüll entsorgt werden. Daraus resultieren bedeutende Kostenvorteile gegenüber dem Naßabscheideverfahren.

Allerdings wird bei den meisten herkömmlichen Anlagen die Filtermatte manuell abgesaugt, so daß es zu Standzeiten der Anlage und einem nicht unerheblichen Wartungsaufwand kommt. In jüngster Zeit ist daneben auch eine Anlage bekanntgeworden, bei der die Absaugung des Farbstaubes automatisch über einen sich in Querrichtung zur Filtermatte entlang einer Schiene hin und her bewegenden Absaugschlauch erfolgt, an welchem die Filtermatte vorbeigeführt wird. Dabei wird neben der Verringerung der Wartungsarbeiten auch eine Verlängerung der Lebensdauer der Filtermatte erzielt, indem die Absaugung erfolgt, bevor die Filtermatte zu sehr belastet ist. Diese Anlage ist relativ aufwendig und bedarf zur Erzeugung des Saugstromes und für die Bewegung des Absaugschlauches und des Absaugmundstückes eines zusätzlichen Energieaufwandes. Zum Stand der Technik wird auf folgende Vorveröffentlichungen verwiesen: DE 39 26 497 A1; DD 62 148 A; US 4 521 230 A; US 3 378 398 A; US 3 075 333 A.

Aufgabe der Erfindung ist ein Verfahren der oben erwähnten Art bereitzustellen, welches gegenüber den bekannten Verfahren bedeutend vereinfacht ist. Erfindungsgemäß gelingt dies dadurch, daß die Filtermatte bereichsweise in ihrer Stärke verjüngt und anschließend wieder auf ihre Stärke expandieren gelassen wird, wobei der Bereich, in dem die Filtermatte verjüngt wird, sukzessive über im wesentlichen die gesamte Ausdehnung der Filtermatte verändert wird.

Allein durch diese periodisch sich wiederholende mechanische Einwirkung auf die Filtermatte kann in Zusammenwirkung mit der natürlichen Schwerkraft bereits eine ausreichende Entfernung der Partikel aus der Filtermatte erzielt werden. Eine zusätzliche Absaugung der Partikel kann somit entfallen, so daß die Anschaffungs- und Betriebskosten sowie der Instandhaltungsaufwand einer Filtereinrichtung, deren Filtermatte nach dem erfindungsgemäßen Verfahren gereinigt wird, bedeutend verringert werden. In einer bevorzugten Ausführungsform der Erfindung wird die bereichsweise Verjüngung der Stärke der Filtermatte erzielt, indem die Filtermatte um eine Rolle geführt wird, deren Durchmesser im Bereich der Stärke der Filtermatte liegt oder kleiner als dieser ist. In einer anderen bevorzugten Ausführungsform der Erfindung wird die bereichsweise Verjüngung der Stärke der Filtermatte erzielt, indem die Filtermatte zwischen zwei Rollen geführt wird, welche in festem Abstand zueinander angeordnet sind, der kleiner ist als die Stärke der Filtermatte.

Weitere Vorteile und Einzelheiten der Erfindung werden im folgenden anhand der beiliegenden Zeichnung erläutert, welche beispielhafte Ausführungsformen der Erfindung veranschaulicht. Es zeigen:
- Fig. 1: einen schematischen Längsschnitt einer in einer Grube eines Lackierraumes eingebauten Filtereinrichtung und
- die Fig. 2 bis 4: schematische Darstellungen weiterer Ausführungsformen der Erfindung.

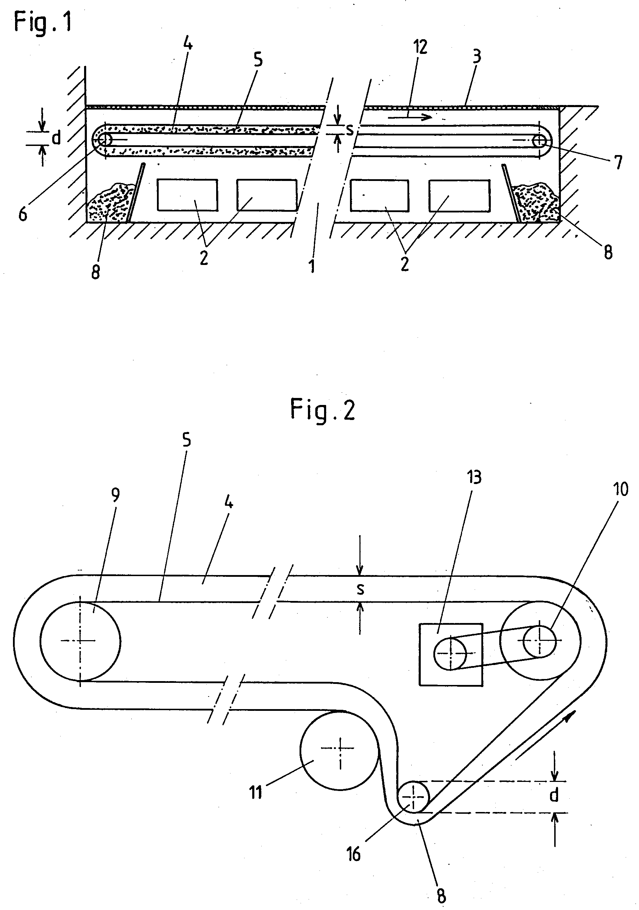

Die in Fig. 1 schematisch veranschaulichte Filtereinrichtung ist in eine mit einem Gitter 3 abgedeckte Grube 1 eines nicht näher dargestellten Lackierraumes eingebaut. Die mit Lackpartikeln oder Lösungsmittelpartikel angereicherte Luft des Lackierraumes wird von einer Luftabsaugeinrichtung 2 durch eine vliesartige Filtermatte 4 hindurch abgesaugt, wobei die Farbpartikel bzw. Lösungsmittelpartikel zum größten Teil von der Filtermatte 4 zurückgehalten werden und sich in bzw. an dieser ablagern. Diese vliesartige Filtermatte 4 ist auf einem endlosen, luftdurchlässigen Trägerband 5 festgelegt, das nach Art eines Förderbandes um zwei ortsfest gelagerte Walzen 6 und 7 geführt von welchen zumindest eine Walze angetrieben ist. Der Antrieb kann kontinuierlich oder periodisch arbeiten. Im ersten Fall wird das Filterband mit einer Geschwindigkeit von ca. 0,05 bis 2 m/sec bewegt, wobei die gewählte Geschwindigkeit abhängig ist vom Umfang des Lackierbetriebes. Dieses Trägerband 5 nimmt Zugkräfte auf und stellt den Kraftschluß zur angetriebenen Walze 6 sicher. Wesentlich ist daß diese Walzen 6 und 7 oder zumindest eine dieser Walzen einen Durchmesser aufweisen, der im Bereich der Stärke s der Filtermatte 4 liegt bzw. kleiner als dieser ist. Wenn die Filtermatte 4 von der angetriebenen Walze 6, beispielsweise in Richtung des Pfeiles 12 bewegt wird, wird sie in den Bereichen, welche um die Walzen 6 und 7 laufen, aufgrund des kleinen Durchmessers d dieser Walzen 6 und 7 gestreckt und dabei in ihrer Stärke s erheblich verjüngt. Sobald diese Bereiche passiert expandiert die Filtermatte 4 aufgrund der ihr innewohnenden Elastizität wiederum auf ihre ursprüngliche Stärke s. Durch diese mechanischen Einwirkungen bei der Verjüngung und durch die anschließende Ausdehnung wird ein Großteil des in der Filtermatte 4 befindlichen Partikelstaubes aus den betroffenen Bereichen gelöst und fällt durch die Wirkung der Schwerkraft in die hier unterhalb dieser Walzen 6 und 7 vorgesehenen Sammelbehälter 8 aus.

Wenn die Filtermatte 4 einen halben Umlauf ausgeführt hat, hat jede Stelle der Filtermatte 4 eine der Walzen 6, 7 passiert. Der Bereich, in dem die Filtermatte 4 verjüngt und anschließend wieder expandieren gelassen wurde, ist somit sukzessive über die gesamte Ausdehnung der Filtermatte 4 verändert worden. Ein Großteil des in der Filtermatte 4 befindlichen Partikelstaubes wurde dadurch entfernt.

Die Reinigung der Filtermatte 4 kann fortlaufend durchgeführt werden, indem die Filtermatte 4 während der Lackierarbeiten ständig umläuft nach Art eines endlosen Bandes. Es können aber auch in einer Pause der Lackierarbeiten ein oder mehrere Reinigungszyklen durchgeführt werden.

Beim Ausführungsbeispiel nach Fig. 1 ist das gesamte Trägerband 5 über seine Breite und Länge mit einer Filtermatte 4 versehen, die daher etwa die doppelte Länge der Grube 1 aufweist. Es wäre aber auch möglich, nur etwa die Hälfte des Trägerbandes 5 mit einer die einfache Länge der Grube aufweisenden Filtermatte 4 zu versehen. Nach der Reinigung der Filtermatte 4 müßte dann die richtige Stellung des Trägerbandes, in der die Filtermatte dem Gitter 3 in ihrer gesamten Länge unmittelbar benachbart ist, sichergestellt werden.

Ein weiteres Ausführungsbeispiel der Erfindung ist in Fig. 2 gezeigt. Die hier nur zum Teil dargestellte Filtermatte 4 bzw. deren Trägerband 5 ist über Walzen 9, 10, 11 geführt, deren Durchmesser größer als die Stärke s der Filtermatte 4 sind, wobei die eine Walze 10 von einer Antriebseinrichtung angetrieben ist. Aufgrund der Größe der Durchmesser der Walzen 9, 10 und 11 wird die Filtermatte 4 beim Umlaufen um diese in ihrer Stärke kaum verjüngt, so daß kein Lackstaub in diesen Bereichen ausgeschieden wird. Zusätzlich ist hier die Filtermatte 4 um eine weitere Walze 16 geführt, deren Durchmesser d kleiner oder gleich der Stärke s der Filtermatte 4 ist. Im an diese Rolle 16 jeweils angrenzenden Bereich der Filtermatte 4 wird diese, während sie um die Walze 16 läuft, in ihrer Stärke verjüngt und expandiert anschließend wieder auf ihre ursprüngliche Stärke, wobei ein Großteil des in der Filtermatte 4 gespeicherten Staubes aus der Filtermatte nach unten fällt.

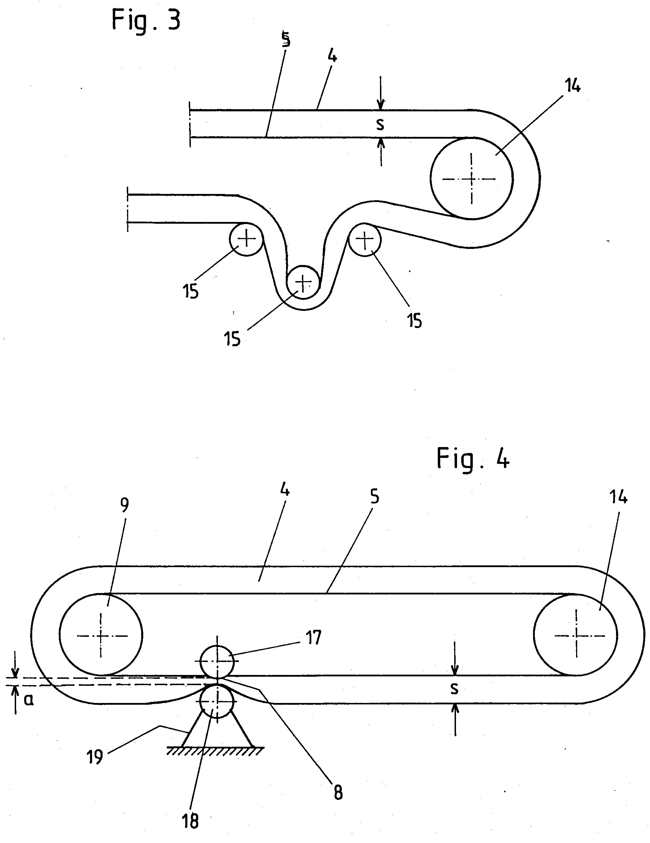

Eine ähnliche Ausführungsform der Erfindung ist in Fig. 3 schematisch dargestellt. Im gezeigten Abschnitt läuft die Filtermatte 4 um eine Walze 14 mit großem Durchmesser und um Walzen 15 mit kleinem Durchmesser, in deren Bereich der Partikelstaub aus der Filtermatte 4 abgeschieden wird. Es sind noch weitere Anordnungen denkbar, bei denen die Filtermatte um Walzen läuft, deren Durchmesser kleiner oder gleich der Stärke der Filtermatte ist. Andererseits ist es auch möglich, die Filtermatte stationär auszubilden und die Walzen 15 entlang der Filtermatte hin und her zu verschieben. Auch dann wird die Stärke der Filtermatte sukzessive verjüngt, wobei darauf zu achten ist, daß zumindest ein Teil der Oberfläche des verjüngten Bereiches der Filtermatte in etwa zur Seite oder nach unten gerichtet ist, damit die zu entfernenden Partikel der auf sie einwirkenden Schwerkraft folgen können und aus der Filtermatte fallen.

In Fig. 4 ist ein Ausführungsbeispiel der Erfindung gezeigt, bei dem die Filtermatte 4 zwischen zwei Walzen 17 und 18 geführt ist, die an einem Trägerrahmen 19 in einem festen Abstand a zueinander angeordnet sind, der kleiner ist als die Stärke s der Filtermatte 4. Zur Reinigung der Filtermatte 4 wird diese durch die eine Art Rakel bildenden Walzen 17 und 18 bewegt, wobei jeweils der zwischen die beiden Walzen gelangende Bereich 8 der Filtermatte 4 verjüngt wird und anschließend wieder expandiert. Bei diesem Ausführungsbeispiel ist somit der Durchmesser der Walzen 17 und 18 nicht entscheidend in Vergleich zur Stärke der Filtermatte 4, vielmehr ihr gegenseitiger Abstand zueinander. Es könnte weiters auch die Filtermatte 4 stationär ausgebildet sein und der Trägerrahmen 19 mitsamt den Walzen 17 und 18 bewegt werden, wobei dann wiederum die Filtermatte zumindest abschnittsweise hin und her bewegt wird, damit alle ihre Abschnitte und Bereiche durch die Walzen 17 und 18 gelangen.

Die erfindungsgemäße Filtereinrichtung muß nicht in eine Grube 1 eingebaut sein, sondern könnte beispielsweise auch in einem aufrecht stehenden Gehäuse angeordnet sein, welches sich unmittelbar im Bereich hinter dem zu lackierenden Werkstück befindet. Zur bereichsweisen Verjüngung der Filtermatte müssen auch nicht unbedingt Walzen verwendet werden. Es könnte beispielsweise ein Stempel vorgesehen sein, welcher eine lineare Vor- und Rückbewegung ausführen kann und dabei jeweils einen Bereich der Filtermatte zusammendrückt und wieder expandieren läßt. Unabhängig von der jeweiligen Anordnung der Filtermatte und ihrer Ausbildung ist die Anordnung so zu wählen und so zu gestalten, daß zumindest ein Teil der Oberfläche des jeweils verjüngten Bereiches der Filtermatte in etwa zur Seite oder nach unten gerichtet so daß die in der Filtermatte 4 befindlichen und zu entfernenden Partikel aufgrund ihres eigenen Gewichtes aus der Filtermatte 4 fallen können.

Dank des erfindungsgemäßen Verfahrens und der zur Durchführung dieses Verfahrens vorgesehenen Einrichtungen läßt sich die Filtermatte sehr effektiv reinigen, ohne daß es einer zusätzlichen, äußeren Energiezufuhr bedarf. Die der Filtermatte aufgezwungene periodische Änderung ihrer Dicke reicht dafür aus.

### Legende

### zu den Hinweisziffern:

- 1: Grube
- 2: Luftabsaugeinrichtung
- 3: Gitter
- 4: Filtermatte
- 5: Trägerband
- 6: Walze
- 7: Walze
- 8: Sammelbehälter
- 9: Walze
- 10: Walze
- 11: Walze
- 12: Pfeil
- 13: Antriebseinheit
- 14: Walze
- 15: Walze
- 16: Walze
- 17: Walze
- 18: Walze
- 19: Trägerrahmen

## Patentansprüche

1. Verfahren zur Reinigung einer vliesartigen Filtermatte einer Filtereinrichtung zur Filterung eines Partikel, insbesondere Lack- und/oder Lösungsmittel enthaltenden Luftstromes, dadurch gekennzeichnet, daß die Filtermatte bereichsweise in ihrer Stärke verjüngt und anschließend wieder auf ihre Stärke expandieren gelassen wird, wobei der Bereich, in dem die Filtermatte verjüngt wird, sukzessive über im wesentlichen die gesamte Ausdehnung der Filtermatte verändert wird.

2. Verfahren nach Anspruch 1, dadurch gekennzeichnet, daß zur bereichsweisen Verjüngung der Filtermatte (4) diese um mindestens eine Walze geführt wird, deren Durchmesser (d) im Bereich der Stärke (s) der Filtermatte (4) liegt oder kleiner als dieser ist.

3. Verfahren nach Anspruch 1, dadurch gekennzeichnet, daß zur bereichsweisen Verjüngung der Filtermatte (4) diese zwischen zwei Walzen durchgeführt wird, die in festem Abstand (a) zueinander angeordnet sind, der kleiner ist als die Stärke (s) der Filtermatte (4).

4. Verfahren nach einem der Ansprüche 1 bis 3, dadurch gekennzeichnet, daß zumindest ein Teil der Oberfläche des jeweils verjüngten Bereiches der Filtermatte in etwa zur Seite oder nach unten gerichtet wird und die in der Filtermappe befindlichen und zu entfernenden Partikel aufgrund ihres Eigengewichtes unter der Einwirkung der Schwerkraft aus der Filtermatte (4) fallen.

5. Filtereinrichtung mit einer Filtermatte zur Durchführung des Verfahrens nach einem der Ansprüche 1 oder 2, dadurch gekennzeichnet, daß sie zumindest eine Walze aufweist, deren Durchmesser (d) im Bereich der Stärke (s) der Filtermatte (4) liegt oder kleiner als dieser ist und um die die Filtermatte (4) geführt oder auf die die Filtermatte aufwickelbar ist.

6. Filtereinrichtung nach Anspruch 5, dadurch gekennzeichnet, daß zwei Walzen vorgesehen sind, um die die Filtermatte (4) nach Art eines endlosen Bandes umlaufend geführt ist und der Durchmesser mindestens einer Walze kleiner oder gleich der Stärke (s) der Filtermatte (4) ist.

7. Filtereinrichtung zur Durchführung des Verfahrens nach einem der Ansprüche 1 oder 3, dadurch gekennzeichnet, daß sie zumindest zwei Walzen aufweist, welche in einem Abstand (a) zueinander angeordnet sind, der kleiner ist als die Stärke (s) der Filtermatte (4), und die Filtermatte (4) zwischen diesen beiden Walzen hindurchgeführt ist.

8. Filtereinrichtung nach einem der Ansprüche 5 bis 7, dadurch gekennzeichnet, daß die Filtermatte (4) in an sich bekannter Weise mit einem luftdurchlässigen Trägerband (5) verbunden ist.

9. Filtereinrichtung nach einem der Ansprüche 5 bis 8, dadurch gekennzeichnet, daß zumindest ein Teil der Oberfläche des verjüngten Bereiches der Filtermatte (4) in etwa zur Seite oder nach unten gerichtet ist.

10. Filtereinrichtung nach einem der Ansprüche 5 bis 9, dadurch gekennzeichnet, daß die Filtermatte (4) in an sich bekannter Weise quer zum Luftstrom beweglich gelagert ist und sich mit einer Geschwindigkeit von ca. 0,05 bis 2 m/sec bewegt.

11. Filtereinrichtung nach einem der Ansprüche 5 bis 10, dadurch gekennzeichnet, daß zumindest ein Teil der Oberfläche des jeweils verjüngten Bereiches der Filtermatte in etwa zur Seite oder nach unten gerichtet ist und die in der Filtermatte befindlichen und zu entfernenden Partikel aufgrund ihres Eigengewichtes unter Einwirkung der Schwerkraft aus der Filtermatte fallen.
